# FASCICULE DE BREVET EUROPEEN

(11) **EP 3 149 917 B1**
(45) Date de publication et mention de la délivrance du brevet: **30.06.2021**
(21) Numéro de dépôt: 15725833.6
(22) Date de dépôt: 07.05.2015
(51) Int. Cl.: H04L 29/08, G06F 9/445, H04L 12/28, G06F 8/60, H04W 4/50, H04W 4/60, H04W 52/02, G06F 8/65

(54) **DISPOSITIF ET PROCEDE POUR PASSERELLE DE MISE A JOUR CONSISTENTE DES SERVICES D'UN RESEAU DOMESTIQUE**
VORRICHTUNG UND VERFAHREN VON GATEWAY ZU KONSISTENTER AKTUALISIERUNG DER DIENSTEN EINER LOKALEN NETZWERK
DEVICE AND METHOD OF MANAGER FOR CONSISTENT UPDATE OF HOME NETWORK SERVICES

(30) Priorité: 26.05.2014 FR 1454726
(43) Date de publication de la demande: 05.04.2017
(73) Titulaire: ORANGE, 75015 Paris (FR)
(72) Inventeur: CONAN, Martin, 35510 Cesson Sevigne (FR); LEDUBY, Jean-Bernard, 22430 Erquy (FR)
(86) Numéro de dépôt international: PCT/FR2015/051215
(87) Numéro de publication internationale: WO 2015/181461

(56) Documents cités:
- EP-A1- 1 574 951
- US-A1- 2003 143 952
- US-A1- 2010 115 576
- Anonymous: "Pebble", , 21 août 2013 (2013-08-21), XP055157040, Extrait de l'Internet: URL:https://web.archive.org/web/2013082123 3233/http://help.getpebble.com/customer/po rtal/articles/955557-getting-started---ios [extrait le 2014-12-05]
- Anonymous: "Pebble - Applications Android sur Google Play", , 18 avril 2014 (2014-04-18), XP055157230, Extrait de l'Internet: URL:https://web.archive.org/web/2014041820 4948/https://play.google.com/store/apps/de tails?id=com.getpebble.android&hl=fr [extrait le 2014-12-08]
- None

## Description

### Domaine technique

L'invention s'applique à la communication entre deux terminaux, en particulier à la mise à jour d'un terminal à partir d'un autre terminal.

L'invention s'applique tout particulièrement à la mise à jour d'un terminal via un terminal mobile.

On entend par les termes 'terminal mobile' tout type de terminal qui peut être déplacé tout en restant connecté à un réseau de communication mobile. Il peut s'agir par exemple d'un téléphone mobile ou encore d'un ordinateur, d'une tablette électronique, etc.

### Etat de la technique

Un réseau local, aussi appelé réseau domestique, est un réseau informatique qui relie ensemble, avec ou sans fils, les terminaux (ordinateurs, périphériques d'impression, de restitution, de stockage, etc.) d'une maison aptes à communiquer ensemble. Un réseau domestique comporte généralement un équipement routeur, aussi communément appelé passerelle domestique, ou passerelle de service, élément intermédiaire assurant la redirection, ou routage, des paquets de données entre les différents terminaux et les réseaux qui lui sont connectés. Un tel réseau domestique connecte souvent les différents terminaux en utilisant la technologie WiFi. On rappelle ici que l'appellation WiFi (pour « Wireless Fidelity ») rassemble des technologies de transmission sans fil permettant de créer des réseaux informatiques sans fil basés sur les normes de la famille IEEE 802.11.

Par la suite, on entend par dispositif terminal, ou plus simplement « terminal », tout dispositif apte à se connecter à la passerelle de service, tel un ordinateur, un téléviseur, un ordinateur personnel, une tablette électronique, un *Smartphone,* un PDA (« Personnal Digital Assistant ») ou plus généralement tout dispositif apte à communiquer avec ou sans fils avec la passerelle de service ou avec un autre terminal, notamment un dispositif mobile.

Dans le contexte d'un réseau domestique, un utilisateur a la possibilité d'exécuter un service donné sur un ou plusieurs terminaux donnés disposant de caractéristiques propres. Le service ne peut être rendu correctement sur un terminal particulier que si l'ensemble des composantes logicielles nécessaires à son bon fonctionnement sont déployées, c'est à dire installées et activées pour ce type de terminal. Il est de surcroît important que ces composantes logicielles soient constamment à jour, c'est-à-dire correspondent à la dernière version du fournisseur du service. Dans le cas contraire, une incompatibilité entre les différentes versions des différentes composantes du service peut entraîner un disfonctionnement.

Il existe des solutions pour mettre à jour un tel service sur un terminal donné : par exemple, une boutique d'applications mobiles (« *App Store*» ou *«boutique Android»*) permet à l'utilisateur de télécharger un service donné pour un terminal mobile. Selon un autre exemple, les spécifications du forum international « broadband forum », en particulier la spécification TR069 ("CPE WAN Management Protocol"), offrent des solutions pour gérer la communication entre un équipement terminal d'un réseau local et un serveur d'auto-configuration associé dans un réseau appartenant à un opérateur, permettant ainsi une administration à distance (configuration, diagnostic, mise à jour, maintenance, etc.) d'un terminal donné.

Cependant, un tel service peut nécessiter la coopération entre plusieurs équipements du réseau local. Par exemple, pour gérer la restitution d'un contenu multimédia sur une tablette numérique à partir d'un PC ou d'un téléphone mobile, il est nécessaire de disposer d'une composante du service sur la tablette et sur le PC ou téléphone mobile. Selon un autre exemple, pour visualiser des photographies numériques stockées sur un smartphone sur un téléviseur, ou en coopération entre les deux terminaux, il est nécessaire également de disposer d'une composante logicielle dans les deux terminaux. Dans ce cas, le service peut être vu comme un ensemble de composantes logicielles, ou programmes, associées à un ensemble de composantes matérielles. De manière générale, par la suite, on parlera de service coopératif pour référer à un tel service multi-composantes distribué sur plusieurs terminaux. Chaque composante peut elle-même comporter un certain nombre de sous-composantes (programmes, fichiers de configuration, de paramètres, etc.)

On entend par la mise à jour d'un tel service le remplacement ou la modification de tout ou partie des diverses sous-composantes des composantes du service de manière à obtenir une version donnée du service pour toutes composantes ou sous-composantes.

Les solutions de mise à jour mentionnées ci-dessus, qu'elles impliquent une boutique d'applications mobiles ou la norme TR069, supposent une connexion du terminal au réseau Internet étendu (WAN). Or un terminal peut ne pas être connecté, à un instant donné, au réseau étendu. En supposant qu'il le soit, le réseau peut être de mauvaise qualité et le temps de mise à jour incontrôlable. Une mise à jour en provenance d'un serveur sur le réseau étendu peut par ailleurs être dangereuse puisque non personnalisée et susceptible de subir des intrusions. De surcroît, une composante du service coopératif peut être mise à jour avant les autres, entraînant un disfonctionnement ou fonctionnement sous-optimal, du service coopératif.

US2003/143952 A1 divulgue un procédé qui permet le téléchargement d'un composant logiciel sur un réseau sans fil à courte distance en réponse à des informations sur le dispositif et / ou des informations utilisateur. Dans un mode de réalisation de la présente invention, des composants logiciels sont téléchargés à partir d'un dispositif de traitement dans un réseau étendu (WAN) couplé au réseau sans fil à courte distance.

L'ensemble XP055157040 et XP055157230 divulgue les fonctions de l'application Pebble App dans un terminal mobile pour contrôler une montre intelligente nommée Pebble. L'application permet au terminal mobile de télécharger des applicatifs locales dans cette montre, ainsi que de vérifier et actualiser le firmware de cette montre dans le cas où celui-ci ne serait pas à jour.

Le téléchargement de ces applications et firmware dans le terminal mobile utilise une connexion mobile ou Wi-fi, alors que la transmission dans la montre intelligente utilise un lien Bluetooth.

US2010/115576 A1 divulgue un procédé et appareil pour fournir à distance un micrologiciel à un dispositif sans fil. L'appareil sans fil peut être configuré pour détecter lorsque le micrologiciel de l'appareil est corrompu ou peut nécessiter une mise à jour. Le dispositif peut alors transmettre une demande d'image de micrologiciel sur un premier canal de communication sans fil. Si un dispositif de mise à jour répond à la demande, le dispositif sans fil peut établir une communication avec le dispositif de mise à jour et commencer à recevoir l'image du micrologiciel.

EP1574951 A1 divulgue un contrôle de cohérence (contrôle de version) des parties distribuées d'une application logicielle sur un système informatique distribué dont les dispositifs sont interconnectés par des liaisons réseau filaires et / ou sans fil. Les informations sur les pièces installées sur les différents appareils sont fournies par chaque appareil à un appareil central, qui regroupe les informations et décide de la cohérence / compatibilité. Si nécessaire et possible, déclenchées par le dispositif central, les mises à niveau logicielles sont téléchargées depuis un serveur vers les dispositifs qui doivent être mis à niveau afin d'assurer la cohérence / compatibilité entre les dispositifs et leurs parties logicielles. L'invention offre une solution ne présentant pas les inconvénients de l'état de la technique.

### L'invention

Les modes de réalisation décrits ne doivent être considérés qu'à titre illustratif et non limitatif. La portée de l'invention est définie par les revendications annexées, les revendications dépendantes définissent d'autres modes de réalisation de l'invention. A cet effet, selon un aspect fonctionnel, l'invention a pour objet un procédé de contrôle de la mise à jour d'un service coopératif dans un réseau local, ledit service comportant au moins deux composantes logicielles, au moins une première composante logicielle sur un premier terminal dit terminal mobile raccordé à un réseau autre que le réseau local, dit réseau mobile, et au moins une seconde composante logicielle sur un second terminal dit terminal récepteur apte à communiquer avec le terminal mobile, ledit procédé étant caractérisé en ce qu'il comporte les étapes de :
- réception sur le terminal mobile d'une mise à jour du service en provenance du réseau mobile ;
- transmission au terminal récepteur de la mise à jour de la seconde composante logicielle.

Ainsi, l'invention permet de mettre à jour un service pour un terminal du réseau local, à partir du terminal mobile. Ce service peut être coopératif, par exemple distribué entre un appareil mobile et un autre appareil du réseau, sans que ce terminal soit nécessairement connecté au réseau étendu (WAN), puisqu'il reçoit automatiquement la mise à jour de sa composante du service, qui est « poussée » à partir du terminal mobile vers le terminal récepteur. La mise à jour correspond ici à un remplacement de tout ou partie de la composante existante. Par exemple, la composante peut comporter un ensemble de sous-composantes sous la forme de logiciels et fichiers (de configuration, de paramétrage, d'interface graphique, d'interface avec un composant matériel, etc.). La mise à jour peut consister à remplacer une ou plusieurs de ces sous-composantes sur le terminal récepteur. L'invention permet donc avantageusement le contrôle des terminaux à mettre à jour pour le service indépendamment du réseau étendu (WAN) et des serveurs applicatifs de ce réseau. Elle présente l'avantage d'une mise à jour simple de terminaux qui ne sont pas connectés au réseau Internet étendu (par exemple, les terminaux qui gèrent les objets de la maison, comme des thermostats électriques, des réfrigérateurs, etc.) mais peuvent communiquer avec le terminal mobile (par exemple, un thermostat peut communiquer avec la tablette ou le smartphone d'un habitant de la maison). On limite de plus considérablement, de cette manière, le risque d'intrusions sur de tels terminaux par une commande à distance inappropriée qui viendrait de l'extérieur du réseau local. De surcroît, dans le cas où le réseau étendu n'est pas performant (ce qui peut être le cas dans certains pays ou certaines régions, ou parce que l'utilisateur ne dispose que d'un abonnement réduit, par exemple dans une résidence secondaire) le procédé est avantageux car la mise à jour du service est réalisée de manière « asynchrone » c'est-à-dire qu'elle est décorrélée du téléchargement sur le réseau étendu, et le temps de téléchargement est donc indépendant de la qualité du réseau.

Le terminal mobile est de préférence raccordé à un réseau mobile mais on peut envisager alternativement un réseau d'un autre type comme un réseau d'entreprise, un autre réseau local, etc.

Selon un mode de mise en œuvre particulier de l'invention, un procédé tel que décrit ci-dessus est en outre caractérisé en ce que la mise à jour du service comporte une sous-composante de contrôle de la mise à jour du service.

Avantageusement selon ce mode de réalisation, le programme de mise à jour est transmis au terminal mobile en même temps que la mise à jour du service lui-même. Il n'est ainsi pas nécessaire d'installer à l'avance le programme de mise à jour sur le terminal mobile. On dispose de cette manière du programme le plus récent de mise à jour pour le service. Corollairement, ce programme de contrôle peut être désinstallé en même temps que le service.

Selon un second mode de mise en œuvre particulier de l'invention, qui pourra être mis en œuvre alternativement avec le précédent, un procédé tel que décrit ci-dessus est en outre caractérisé en ce qu'il comporte les étapes de :
- acquisition d'au moins une information liée à la version de la composante logicielle sur le terminal récepteur ;
- analyse d'au moins une information acquise liée à la version de la composante logicielle ;
- selon les résultats de l'analyse, décision de mise à jour de la composante.

Ce mode de réalisation de l'invention permet de mettre à jour uniquement les composantes du service dont la version est obsolète (c'est-à-dire qu'il existe une version plus récente de la composante ou de ses sous-composantes). Elle procure de plus l'avantage de maîtriser les numéros de version des différentes composantes du service et de s'assurer ainsi que les différentes composantes sur les différents terminaux d'un service coopératif sont compatibles. De cette manière, seules les composantes qui ne bénéficient pas du bon numéro de version seront mises à jour, ce qui évite de pousser systématiquement les mises à jour vers des terminaux qui n'en ont peut-être pas besoin.

Selon un troisième mode de mise en œuvre particulier de l'invention, qui pourra être mis en œuvre alternativement ou cumulativement avec les précédents, un procédé tel que décrit ci-dessus est en outre caractérisé en ce que les deux terminaux sont connectés au réseau local et la communication entre les deux terminaux est établie via ledit réseau local.

Ce mode de réalisation de l'invention procure l'avantage d'un dialogue simple entre terminaux du même réseau local. Un tel réseau local est généralement piloté par la passerelle de service. La connexion des deux terminaux, mobile et récepteur, à la passerelle de service, est dans ce cas classiquement effectuée en mode dit « infrastructure », via une liaison filaire ou sans fil de type WiFi. Le rôle de passerelle peut également être assuré par le terminal mobile lui-même, si celui-ci est en mode dit de « tethering », mode dans lequel le mobile se positionne comme point d'accès au réseau local et remplace la passerelle de service.

Selon un quatrième mode de mise en œuvre particulier de l'invention, qui pourra être mis en œuvre alternativement ou cumulativement avec les précédents, un procédé tel que décrit ci-dessus est en outre caractérisé en ce que la communication entre les deux terminaux est établie en point à point et en ce qu'il comporte une étape préalable d'ouverture de la communication point à point.

Ce mode de réalisation de l'invention procure l'avantage d'une sécurité accrue puisque dans le cas d'une connexion point à point, seuls les deux terminaux concernés (le terminal mobile et son terminal récepteur) manipulent les données de mise à jour, sans transit des données sur le réseau local. Il peut s'agir par exemple d'un mode Wifi dit « ad-hoc » entre les deux terminaux pourvus d'une fonction WiFi, mode aussi appelé « Widi-Direct » (WFD), et comme alternative au mode « infrastructure » décrit préalablement. De plus dans ce mode de connexion point à point, les terminaux récepteurs ne sont pas nécessairement connectés au réseau local, ce qui peut être avantageux pour des raisons de sécurité des données, consommation électrique, etc. Ils sont de surcroît inaccessibles du réseau étendu et insensibles à sa qualité, ce qui renforce l'avantage du caractère asynchrone de la mise à jour dans le cas où le réseau étendu n'est pas performant puisque la connexion point à point en est totalement indépendante.

Selon une variante de ce mode de mise en œuvre particulier de l'invention, un procédé tel que décrit ci-dessus est en outre caractérisé en ce que la communication entre les deux terminaux est établie sur un lien à basse consommation.

Cette variante d'un mode de réalisation de l'invention procure l'avantage de pouvoir adresser des terminaux qui ne disposent pas de la fonction WiFi et permet par ailleurs de minimiser la consommation d'énergie au cours des échanges. Un terminal de la maison, comme par exemple un thermostat, peut disposer par exemple d'une fonction Bluetooth. La technologie Bluetooth est une technologie radio de courte distance destinée à simplifier les connexions entre les appareils électroniques, développée par l'association « Bluetooth SIG ». Elle est particulièrement répandue et utile pour établir une connexion point à point entre appareils proches. Elle est d'utilisation très simple, consomme peu d'énergie et est néanmoins sécurisée. De plus, elle est indépendante du protocole WiFi habituellement utilisé pour la connexion au réseau local. Alternativement, d'autres technologies peuvent être envisagées dans le cadre de l'invention, par exemple le protocole Zigbee ou le protocole Z-Wave, protocoles normalisés qui permettent également la communication de périphériques sur un lien radio, avec une consommation réduite, ou encore la norme DECT (autre norme de communication sans fils), etc. La plupart de ces normes disposent de surcroît d'une déclinaison « très basse consommation » et sont donc très intéressantes dans le cadre de l'invention.

Selon un aspect matériel, l'invention concerne également un dispositif de contrôle de la mise à jour d'un service coopératif dans un réseau local, ledit service comportant au moins deux composantes logicielles, au moins une première composante logicielle sur un premier terminal dit terminal mobile raccordé à un réseau autre que le réseau local, dit réseau mobile, et au moins une seconde composante logicielle sur un second terminal dit terminal récepteur apte à communiquer avec le terminal mobile, caractérisé en ce qu'il comporte :
- un module de réception sur le terminal mobile d'une mise à jour du service en provenance du réseau mobile ;
- un module de transmission au terminal récepteur de la mise à jour de la seconde composante logicielle.

Le terme *module* peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect matériel, l'invention concerne également un terminal mobile incluant un dispositif de contrôle de la mise à jour tel que décrit ci-dessus.

Selon un autre aspect fonctionnel, l'invention a pour objet un procédé de mise à jour d'un service coopératif dans un réseau local, ledit service comportant au moins deux composantes logicielles, au moins une première composante logicielle sur un premier terminal dit terminal mobile raccordé à un réseau autre que le réseau local, dit réseau mobile, et au moins une seconde composante logicielle sur un second terminal dit terminal récepteur apte à communiquer avec le terminal mobile, ledit procédé étant caractérisé en ce qu'il comporte les étapes de :
- réception, sur le terminal récepteur, d'une mise à jour de la seconde composante logicielle en provenance du terminal mobile ;
- mise à jour de la seconde composante logicielle par le terminal récepteur.

Selon un aspect matériel, l'invention concerne également un dispositif de mise à jour d'un service coopératif dans un réseau local, ledit service comportant au moins deux composantes logicielles, au moins une première composante logicielle sur un premier terminal dit terminal mobile raccordé à un réseau autre que le réseau local, dit réseau mobile, et au moins une seconde composante logicielle sur un second terminal dit terminal récepteur apte à communiquer avec le terminal mobile, caractérisé en ce qu'il comporte:
- un module de réception, sur le terminal récepteur, d'une mise à jour de la seconde composante logicielle en provenance du terminal mobile ;
- un module de mise à jour de la seconde composante logicielle par le terminal récepteur.

Selon un autre aspect matériel, l'invention concerne encore une clé électronique incluant un dispositif de mise à jour tel que décrit ci-dessus.

Selon un autre aspect matériel, l'invention concerne encore un terminal domestique non connectable au réseau étendu comportant un dispositif de mise à jour tel que décrit ci-dessus.

Selon un autre aspect matériel, l'invention concerne encore un système comprenant un terminal mobile et au moins un terminal récepteur tels que décrits ci-dessus.

Selon un autre aspect matériel, l'invention concerne également un programme d'ordinateur apte à être mis en œuvre pour le procédé de contrôle de la mise à jour d'un contenu tel que défini ci-dessus, le programme comprenant des instructions de code qui, lorsque le programme est exécuté par un processeur, réalise les étapes du procédé de contrôle de mise à jour.

Selon un autre aspect matériel, l'invention concerne également un programme d'ordinateur apte à être mis en œuvre pour le procédé de mise à jour d'un contenu tel que défini ci-dessus, le programme comprenant des instructions de code qui, lorsque le programme est exécuté par un processeur, réalise les étapes du procédé de mise à jour.

Selon encore un autre aspect matériel, l'invention a trait à un support d'enregistrement lisible par un processeur de données sur lequel est enregistré un programme comprenant des instructions de code de programme pour l'exécution des étapes de l'un quelconque des procédés définis ci-dessus.

Ces dispositifs, ces programmes d'ordinateur, ces supports d'enregistrement, présentent des caractéristiques et avantages analogues à ceux décrits précédemment en relation avec le procédé de contrôle de la mise à jour.

L'invention sera mieux comprise à la lecture de la description qui suit, donnée à titre d'exemple et faite en référence aux dessins annexés.

### Description détaillée d'un exemple de réalisation illustrant l'invention

La figure 1 représente un mode de réalisation de l'invention.
La figure 2 représente une architecture matérielle d'un dispositif de contrôle de la mise à jour connecté à un dispositif à mettre à jour selon un mode de réalisation de l'invention.
La figure 3 représente un chronogramme des échanges entre un dispositif de contrôle de la mise à jour et un dispositif à mettre à jour selon un mode de réalisation de l'invention.

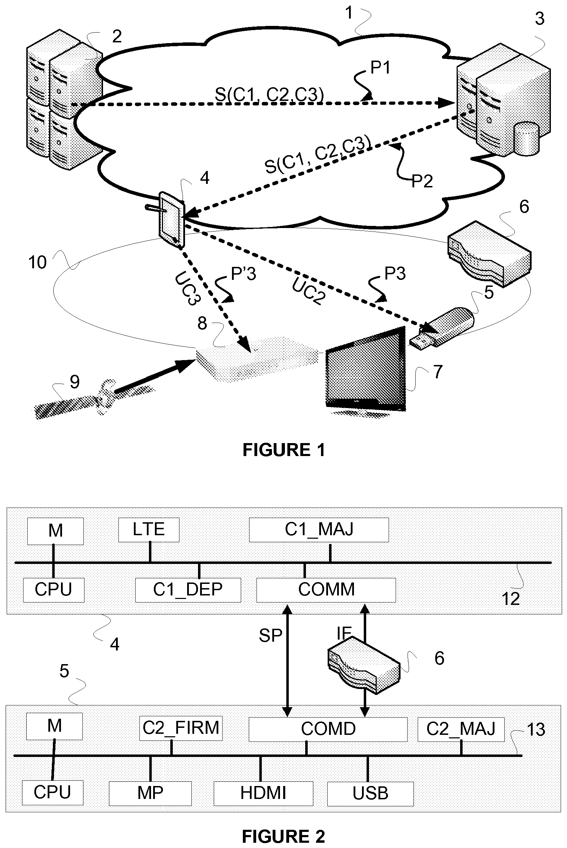

La figure 1 représente un mode de réalisation de l'invention. Le réseau local (10) comprend un terminal mobile (4), un terminal de déport (5) connecté au téléviseur (7) d'un utilisateur, un terminal de type décodeur numérique (8) aussi appelé STB d'après son appellation anglo-saxonne de *Set-Top-Box* et une passerelle de service (6). Le contexte du réseau local domestique est donné à titre d'exemple et pourrait être transposé aisément à celui d'un réseau d'entreprise.

Le réseau (10) est un réseau local sans fil (*Wi-Fi*)*.* Les dispositifs terminaux 4 et 5 sont aptes à établir des connexions avec la passerelle de service (6) reliée par ailleurs au réseau internet étendu (WAN, non représenté) par une liaison haut débit. Le réseau (10) est par exemple un réseau local IP (« Internet Protocol », *Internet Protocol,* protocole de base pour les réseaux de type Internet et par extension, nom du réseau lui-même) et la liaison haut débit est de type ADSL (de l'anglais *Asymmetric Digital Subscriber Line*)*.*

Le terminal mobile (4) est par ailleurs raccordé à un réseau mobile (1) contenant un serveur d'applications (3), qui héberge notamment des services pour mise à disposition des terminaux du réseau local (10). Ces applications, ou services, peuvent être coopératifs c'est-à-dire concerner plusieurs terminaux du réseau local. Elles sont déposées sur le serveur d'applications (3) par un serveur (2) appartenant par exemple à un opérateur de service et/ou de réseau, et correspondent aux services coopératifs de cet opérateur qui peuvent être mis à disposition des terminaux du réseau local, par exemple un service de déport des contenus numériques reçus sur le mobile (4) vers le téléviseur (7).

La passerelle de service (6) est, dans cet exemple, une passerelle domestique qui assure le routage des données dans le réseau local (10) et entre le réseau local (10) et le réseau étendu (WAN). La passerelle domestique (6) est par exemple un équipement routeur connu sous la désignation commerciale de *Livebox©.* Elle comporte une fonction de communication WiFi, ou point d'accès (en anglais : AP, pour *Access Point*), qui lui permet de communiquer avec les terminaux du réseau sans fil. Ce point d'accès inclut un module radio bidirectionnel pour émettre ou recevoir les signaux dans le réseau local.

Dans cet exemple, le terminal mobile (4) est connectable à un réseau mobile (1). Alternativement, il pourrait être connectable à tout autre réseau hébergeant un serveur d'applications, par exemple un réseau local d'entreprise. Le terminal mobile (4) est par exemple un *smartphone* ou une tablette numérique, ou encore un ordinateur portable. Le réseau mobile (1) est un réseau mobile de radiocommunication cellulaire, par exemple de troisième génération (3G, selon le standard UMTS « Universal Mobile Telecommunications System » bien connu de l'homme du métier) ou encore de quatrième génération (4G, par exemple selon le standard LTE pour « Long Term Evolution »), etc. Le terminal mobile (4) peut également, le cas échéant, jour le rôle de la passerelle de service s'il est positionné en mode dit « tethering », mode dans lequel il donne aux autres terminaux du réseau local l'accès au WAN, en agissant comme un routeur.

Dans cet exemple, les deux terminaux récepteurs aptes à rentrer en communication avec le terminal mobile (4) sont donc d'une part un dispositif de déport (5) et d'autre part la STB (8). Par la suite, on entend par terminal récepteur tout terminal apte à se connecter à la passerelle (6) ou au mobile (4), tel un ordinateur ou un dispositif du type téléviseur (TV), ordinateur personnel (PC), *Smartphone,* PDA (« Personnal Digital Assistant »), STB (Set Top Box) ou plus généralement tout dispositif apte à communiquer avec ou sans fils avec la passerelle dans le contexte du réseau local ou directement avec le terminal mobile (4) en point à point.

Dans cet exemple, un premier service coopératif fourni par un opérateur de réseau et/ou de services (2) est du type mobile et vise des applications mobiles dont une partie est déportée sur un autre terminal du réseau : restitution, visualisation de contenus multimédia, etc. Un tel service coopératif s'exécute donc en partie sur le terminal mobile (4) et en partie sur le terminal (5) associé au téléviseur (7). Le périphérique de déport (5) est connecté dans notre exemple sur un port vidéo HDMI du téléviseur (7) de l'utilisateur et se présente sous la forme d'une clé électronique (en anglais, « dongle »). Dans la suite, on le nomme « clé de déport ». L'utilisateur sélectionne un contenu, par exemple une vidéo, sur le terminal mobile (4) (*smartphone,* tablette, ordinateur, etc.) connecté au réseau mobile. Le contenu multimédia à visualiser sur le TV (7), est téléchargé par la suite par la clé de déport, par exemple en mode de téléchargement progressif (*streaming*) sur le réseau Internet étendu (WAN) et restitué sur le téléviseur. Dans cet exemple, la clé de déport se connecte elle-même au réseau étendu via la passerelle de service (6). Ce déport du contenu présente plusieurs avantages puisque le mobile peut être déchargé d'une tâche consommatrice en ressources (décodage, affichage de la vidéo, etc.) ce qui lui permet de rendre d'autres fonctions pour l'utilisateur dans le même temps (e.g. visualisation d'un courrier, traitement d'un message court (SMS), etc.) et le mobile peut de plus servir de télécommande pour des fonctions de base relatives au contenu, comme par exemple l'arrêt de la restitution (« pause », « stop »), le contrôle du volume, etc. Ce premier exemple de service coopératif comporte donc deux composantes : une sur le terminal mobile pour sélectionner et contrôler les programmes et assurer la mise à jour (C1) et une autre sur la clé de déport (C2) pour assurer le téléchargement et la mise à disposition des données multimédia pour le téléviseur (7).

Un autre moyen pour l'utilisateur de regarder la télévision sur le TV (7) est d'utiliser le décodeur numérique (STB, 8) qui lui est associé, qui reçoit par un réseau satellite (9) la télévision numérique diffusée de type DVB (acronyme de *Digital Video Broadcast,* un ensemble de normes de télévision numérique édictées par le consortium européen DVB). Selon cette norme, différents programmes diffusés sont répartis dans des flux de transport reçus par des décodeurs numériques (8) d'utilisateurs via des supports de réception appropriés (antennes, câbles, etc.) et les différents programmes qui les constituent sont rendus disponibles pour un utilisateur, notamment à des fins de visualisation sur un téléviseur (7). Le décodeur (8), dans cet exemple, est un décodeur satellite (9). Il n'est pas connecté au réseau Internet étendu (WAN), ni au réseau local (10). Il ne dispose pas d'un module WiFi. Il dispose en revanche d'une interface Bluetooth (BT) qui va lui permettre de communiquer directement avec le terminal mobile (4). Le service à rendre est le suivant : il se peut que la version logicielle de la STB ne soit pas à jour et n'autorise pas la réception et visualisation du contenu sur le TV. C'est dans ce contexte la connexion de la STB au terminal mobile (4) via la liaison Bluetooth qui va lui permettre de recevoir la mise à jour qui est nécessaire à son fonctionnement. Ce second exemple de service comporte donc également deux composantes : une sur le terminal mobile pour assurer la mise à jour (C1) et une seconde sur la STB (C3) pour assurer la réception et la mise à disposition des données multimédia au téléviseur (7).

Dans ces deux exemples de services, le fonctionnement global du système est le suivant :
- Dans une première étape, l'opérateur de service et/ou de réseau (2) conçoit le service coopératif. Le service se présente sous forme d'un ensemble de composantes logicielles dont la coopération est destinée à assurer le service global (ici, l'ensemble des composantes logicielles qui permettent la visualisation sur le téléviseur). Une première composante (C1) est destinée au terminal mobile lui-même.
   ∘ Dans le cas du service de déport, la première composante C1 comprend deux sous-composantes : une première sous-composante correspondant au programme de mise à jour lui-même, s'il n'est pas déjà présent sur le terminal mobile, et une seconde sous-composante correspondant à la mise à jour de la partie du service qui se trouve sur le terminal mobile (interface graphique de l'application, etc.). Une seconde composante (C2) est destinée à la clé de déport : elle comporte notamment une application logicielle de bas niveau (*firmware*) pour la clé.
   ∘ Dans le cas du service de visualisation de programmes via la STB satellite, la première composante C1 comprend une sous-composante correspondant au programme de mise à jour, qui peut se trouver déjà présent sur le mobile ou non. Une seconde composante (C3) est destinée à la STB : elle comporte par exemple une application logicielle de haut-niveau (interface graphique, décodage, etc.) ou de bas niveau (mise à jour du firmware, etc.) pour la STB.
- Dans une seconde étape, notée P1 sur la figure, le service S(C1,C2,C3) (la notation prend en compte les deux services en même temps pour des raisons de simplicité mais naturellement les deux services peuvent être complètement décorrélés) est mis à disposition sur un serveur d'applications (3) du réseau mobile (« Apple Store », etc.).
- Dans une troisième étape, notée P2, le terminal mobile (4) télécharge cette application (S) à partir du serveur (3).
- Un canal de communication est établi entre le terminal mobile (4) et le terminal récepteur (5,8). Cette communication peut être de plusieurs types :
   ∘ elle peut être classiquement effectuée via le réseau local. Notadans notre exemple, les deux terminaux (4,5) sont connectés classiquement en mode dit « infrastructure » à la passerelle de service (6), par un processus d'appairage préalable bien connu de l'homme du métier, au cours duquel sont entrés notamment l'identifiant de la passerelle de service (SSID pour « Service Set IDentifier »), et sa clé de sécurité WEP (de l'anglais Wired Equivalent Privacy).
   ∘ Il peut s'agir d'une communication en mode dit « ad-hoc » entre les deux terminaux (4,5) pourvus d'une fonction Wifi. En mode ad-hoc, aussi appelé « Widi-Direct », et par opposition au mode « infrastructure » décrit préalablement, les dispositifs sans fils se connectent les uns aux autres afin de constituer des liaisons point à point (« peer to peer » en anglais), c'est-à-dire un réseau dans lequel chaque dispositif joue en même temps le rôle de client et le rôle de serveur, ou point d'accès.
   ∘ Les terminaux visés peuvent être dépourvus d'une fonction WiFi. C'est le cas du terminal STB (8) de l'exemple, qui n'est équipé que d'une fonction Bluetooth. Dans ce cas, la communication est établie en point à point en mode Bluetooth entre les deux terminaux.
   ∘ Alternativement, la communication peut être établie par tous les moyens à la portée de l'homme du métier, notamment par tous les protocoles de radiocommunications qui permettent de communiquer entre deux terminaux : le protocole Zigbee ou Z-Wave (protocoles qui permettent la communication de périphériques sur un lien radio, avec une consommation réduite), DECT (autre norme de communication sans fils), etc. Parmi ces protocoles, certains permettent avantageusement une consommation réduite : la norme « DECT Ultra Low Energy » (en abrégé DECT ULE, une extension de DECT pour les applications à basse énergie), un profil de la norme Bluetooth qui consomme encore moins d'énergie (norme « Bluetooth Low Energy », abrégée BLE, dont le but est de fournir une puissance réduite par rapport aux applications standard de la norme Bluetooth), etc.
- Lors de cette communication, le terminal mobile transmet à la clé de déport la mise à jour (UC2) de la composante C2 qui lui est nécessaire pour la mise à jour du service, ou la mise à jour (UC3) de la composante C3 qui est nécessaire à la STB. Ces étapes de transmission de la mise à jour sont notées P3 et P'3 respectivement. On notera que la mise à jour (UC2, UC3) peut être ou non égale à la composante elle-même (C2, C3).
- La clé de déport (resp. la STB) se met à jour, soit en remplaçant l'ancienne composante C2 (resp. C3), par exemple le *firmware,* par la nouvelle, soit en exécutant une mise à jour de la composante C2 (resp. C3) par un remplacement de certaines sous-composantes (par exemple, en remplaçant des fractions du *firmware*) et le service coopératif peut s'effectuer comme décrit précédemment.

La figure 2 représente une architecture matérielle d'un dispositif de contrôle de la mise à jour sur un terminal mobile connecté à un dispositif de mise à jour sur un terminal à mettre à jour selon un mode de réalisation de l'invention.

Le dispositif mobile du terminal mobile (4) comprend, classiquement, des mémoires M articulées autour d'un processeur CPU. Les mémoires peuvent être de type ROM (de l'anglais *Read Only Memory*) ou RAM (de l'anglais *Random Access Memory*)*,* amovibles ou fixes, etc. Il communique avec le réseau local (1) via le module de communication (COMM) qui lui permet de se connecter avec fils (via un câble Ethernet) ou sans fils (via un canal radio de type WiFI) à la passerelle de service (6) en mode infrastructure (IF). Un canal de communication « ad-hoc » (SP) peut aussi être utilisé en point à point entre les deux terminaux (4) et (5). Ce canal peut être de type WIFi (Direct), Bluetooth, Zigbee, etc.

Le dispositif mobile comprend encore un module radio-mobile (par exemple, UMTS ou LTE) qui lui permet de dialoguer avec le réseau mobile (1).

Il comporte aussi l'application C1_DEP chargée du contrôle du déport, notamment de la communication avec le dispositif de déport (5), de la sélection d'un contenu (par exemple vidéo) et transmission d'un identifiant de ce contenu au dispositif de déport, du contrôle de la restitution du contenu, etc.

Il comporte aussi un programme C1_MAJ de contrôle de la mise à jour des composantes du service, chargé notamment d'interroger les terminaux à mettre à jour sur leur numéro de version et de prendre la décision de pousser ou non les mises à jour, puis de recevoir les acquittements éventuels de la part des terminaux récepteurs.

Une partie de la mémoire M est reliée au point d'accès Wi-Fi et stocke, entre autres, les paramètres d'identification des passerelles domestiques et des terminaux du réseau mobile auxquels peut accéder le dispositif mobile, ainsi que le service S complet téléchargé depuis le serveur d'applications, avec les composantes C1 (pour le mobile), C2 (pour la clé) et C3 (pour la STB).

Tous ces modules communiquent en interne sur le bus (12).

Le dispositif de déport (5) sur la clé de déport comprend aussi des mémoires M articulées autour d'un processeur CPU. Les mémoires peuvent être de type ROM, RAM, ou autres. Une partie de la mémoire M stocke, entre autres, les paramètres d'identification des passerelles domestiques auxquelles peut accéder le dispositif de déport. Il communique avec le réseau local (1) et le dispositif mobile (4) via le module de communication (COMD) qui lui permet notamment de se connecter sans fils (*WiFi*) à la passerelle de service (6), via la liaison IF (en mode infrastructure) ou directement au dispositif mobile (liaison SP) en point à point (Wi-Fi direct ou Bluetooth). Il comporte aussi :
- une application (C2_MAJ) chargée de la mise à jour du dispositif. Ce module est notamment capable de communiquer avec le mobile via le réseau local et/ou une liaison en point à point, recevoir les mises à jour, les exécuter, et faire redémarrer le terminal pour que la mise à jour devienne effective.
- un module dit « media player » (MP) capable de restituer (recevoir, décoder, préparer) les flux en mode de téléchargement progressif sur le réseau étendu (WAN) et de les délivrer au dispositif de restitution (TV) ; le « media player » comporte entre autres un ensemble de décodeurs (audio, vidéo, etc.) aptes à décoder les contenus multimédia, ainsi qu'une interface de communication avec le dispositif mobile apte à interpréter les ordres en provenance de celui-ci (Pause, retour arrière, contrôle du volume, etc.)
- un module d'interface avec le dispositif de restitution (HDMI) capable de s'interfacer physiquement et logiquement avec le téléviseur pour transmission du contenu décodé, échange de commandes de bases en provenance de la télécommande du téléviseur, etc.
- Un module d'interface série de type USB qui permet notamment de l'alimenter.

Ces deux derniers modules sont contrôlés, parmi d'autres, par le *firmware* de la clé de déport, c'est-à-dire l'ensemble des programmes logiciels de bas niveau qui permettent de contrôler les ressources matérielles (*hardware*) de la clé. Il est noté C2_FIRM ; il s'agit dans notre exemple de la composante à mettre à jour.

Tous ces modules communiquent en interne sur le bus (13).

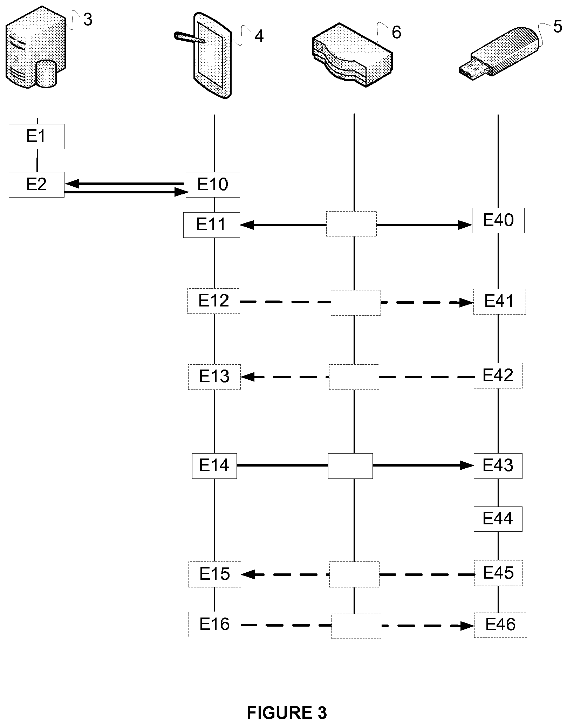

La figure 3 représente un chronogramme des échanges entre un dispositif ou clé de déport (5) connecté à un dispositif de restitution (TV) non représenté et un dispositif mobile (4) selon un mode de réalisation de l'invention.

Lors d'une étape préalable, non représentée, un utilisateur du réseau local (que l'on appellera par la suite « l'utilisateur ») connecte la clé de déport au port HDMI du TV (7). On suppose ici que la clé de déport n'est pas à jour : sa version de *firmware* (C2_FIRM) est obsolète.

Lors d'une étape E1, le serveur (3) d'applications mobiles récupère le service de l'opérateur de réseau et/ou de service S (C1, C2, C3) ;

Lors d'une étape E10, le mobile (4) télécharge via le réseau mobile le service sur le serveur d'applications mobiles (3, *store*). Le service S inclut dans cet exemple :
- La sous-composante de contrôle du déport (C1_DEP) de la restitution du contenu pour le mobile, ou la mise à jour de cette sous-composante. Il peut s'agir par exemple d'un guide de programmes numériques (EPG), permettant la sélection de différentes chaînes TV et/ou contenus numériques (films, musique, etc.) stocké sur le mobile.
- La sous-composante de contrôle de la mise (C1_MAJ) à jour du service si elle n'est pas déjà installée sur le mobile.
- La sous-composante de contrôle C2 (C2_FIRM) contenant le *firmware* ou la mise à jour du *firmware* de la clé électronique.

Lors des étapes E11, E40, le mobile établit une communication avec les terminaux à mettre à jour ; à cette fin il ouvre, si nécessaire, le canal de communication radio en mode WiFi ad-hoc ou en Bluetooth. En mode infrastructure (IF), cette étape n'est pas nécessaire puisque les terminaux sont déjà connectés au réseau local (dans l'exemple, le mobile se connecte à la clé de déport en mode infrastructure mais à la STB en Bluetooth).

Lors d'une étape E12 facultative, le terminal mobile demande le numéro de version de la clé électronique qu'il récupère lors d'une étape E13.

Lors d'une étape E14, il analyse le numéro de version et « pousse » la mise à jour du *firmware* de la clé (UC2_FIRM) s'il n'est pas à jour, sous la forme d'une sous-composante (programme, etc.) ou d'une mise à jour (fichier, « patch » de programme, etc.).

Lors d'une étape E43 la clé de déport récupère le nouveau *firmware* C2_FIRM (ou sa mise à jour UC2_FIRM) et il réinitialise éventuellement la clé de déport pour remettre à jour le *firmware* ou le remplacer lors d'une étape E44.

Lors d'une étape E45, la clé de déport acquitte optionnellement la mise à jour de la nouvelle version.

Lors d'une étape E16 (E46) facultative, le mobile ferme la session (par exemple WiFi Ad-hoc).

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de contrôle de la mise à jour d'un service coopératif (S) dans un réseau local (10), ledit service (S) comportant au moins deux composantes logicielles (C1, C2), au moins une première composante logicielle (C1) sur un premier terminal dit terminal mobile (4) raccordé à un réseau autre que le réseau local (1), dit réseau mobile, et au moins une seconde composante logicielle (C2) sur un second terminal dit terminal récepteur (5,8) apte à communiquer avec le terminal mobile (4), ledit procédé étant **caractérisé en ce que** la communication entre les deux terminaux (4,5) est établie via ledit réseau local (10), lesdites composantes logicielles assurant en coopération le service coopératif, le procédé étant **caractérisé en ce qu'**il comporte les étapes de :
- téléchargement (E10) sur le terminal mobile (4) d'une mise à jour du service (S) en provenance du réseau mobile (1), ladite mise à jour comportant :
∘ la première composante logicielle qui comprend deux sous-composantes : une première sous-composante correspondant à un programme de mise à jour et une seconde sous-composante correspondant à une mise à jour du service coopératif sur le terminal mobile;
∘ la seconde composante logicielle étant une mise à jour du service coopératif sur ledit terminal récepteur ;
- mise à jour de ladite seconde sous-composante logicielle du service coopératif sur le terminal mobile; et
- transmission (E14) vers ledit terminal récepteur (5,8) de ladite seconde composante logicielle.

2. Procédé selon la revendication 1, **caractérisé en outre en ce qu'**il comporte les étapes de :
- acquisition (E12) d'au moins une information liée à la version de la composante logicielle sur le terminal récepteur ;
- analyse (E13) d'au moins une information acquise liée à la version de la composante logicielle;
- selon les résultats de l'analyse (E13), décision de mise à jour de la composante.

3. Procédé selon la revendication 1, **caractérisé en ce que** la communication entre les deux terminaux (4,5) est établie sur un lien à basse consommation (BT, ZWave, BTL).

4. Dispositif de contrôle de la mise à jour d'un service coopératif (S) dans un réseau local (10), ledit service (S) comportant au moins deux composantes logicielles (C1, C2), au moins une première composante logicielle (C1) sur un premier terminal dit terminal mobile (4) raccordé à un réseau autre que le réseau local (1), dit réseau mobile, et au moins une seconde composante logicielle (C2) sur un second terminal dit terminal récepteur (5,8) apte à communiquer avec le terminal mobile (4), **caractérisé en ce que** la communication entre les deux terminaux (4,5) est établie via ledit réseau local (10) et **en ce qu'**il comporte:
- un module de téléchargement (LTE, E10) sur le terminal mobile (4) d'une mise à jour du service (S) en provenance du réseau mobile (1), ladite mise à jour comportant :
∘ la première composante logicielle qui comprend deux sous-composantes : une première sous-composante correspondant à un programme de mise à jour et une seconde sous-composante correspondant à une mise à jour du service coopératif sur le terminal mobile ;
∘ la seconde composante logicielle étant une mise à jour du service coopératif sur ledit terminal récepteur ;
- un module de mise à jour de ladite seconde sous-composante logicielle du service coopératif sur le terminal mobile; et
- un module de transmission (COMM, E14) vers ledit terminal récepteur (5,8) de la seconde composante logicielle .

5. Terminal mobile (4) incluant un dispositif de contrôle de la mise à jour tel selon la revendication 4.

6. Système comprenant un terminal mobile selon la revendication 5 et au moins un terminal récepteur qui est une clé électronique (5) qui inclut: un dispositif de mise à jour comportant un module de réception (COMMD), sur le terminal récepteur (5,8), de la seconde composante logicielle (C2, C3), la seconde composante logicielle étant une mise à jour en provenance du terminal mobile (4), et un module de mise à jour (MAJ) de la seconde composante logicielle par le terminal récepteur (5,8).

7. Programme d'ordinateur apte à être mis en œuvre pour le procédé de contrôle de la mise à jour d'un contenu, le programme comprenant des instructions de code qui, lorsque le programme est exécuté par un processeur, réalise les étapes du procédé de contrôle de la mise à jour selon la revendication 1.

## Patentansprüche

1. Verfahren zur Steuerung der Aktualisierung eines kooperativen Dienstes (S) in einem lokalen Netzwerk (10), wobei der kooperative Dienst (S) mindestens zwei Softwarekomponenten (C1, C2) umfasst, mindestens eine erste Softwarekomponente (C1) auf einem ersten Endgerät, mobiles Endgerät (4) genannt, das an einem anderen Netzwerk als dem lokalen Netzwerk (1), mobiles Netzwerk genannt, angeschlossen ist, und mindestens eine zweite Softwarekomponente (C2) auf einem zweiten Endgerät, Empfangsendgerät (5, 8) genannt, das zur Kommunikation mit dem mobilen Endgerät (4) geeignet ist, wobei das Verfahren **dadurch gekennzeichnet ist, dass** die Kommunikation zwischen den beiden Endgeräten (4, 5) über das lokale Netzwerk (10) hergestellt wird, wobei die Softwarekomponenten in Kooperation den kooperativen Dienst sicherstellen, wobei das Verfahren **dadurch gekennzeichnet ist, dass** es die folgenden Schritte umfasst:
- Herunterladen (E10) einer Aktualisierung des Dienstes (S) vom Mobilnetzwerk (1) auf das mobile Endgerät (4), wobei die Aktualisierung umfasst:
∘ die erste Softwarekomponente, die zwei Teilkomponenten umfasst: eine erste Teilkomponente, die einem Aktualisierungsprogramm entspricht, und eine zweite Teilkomponente, die einer Aktualisierung des kooperativen Dienstes auf dem mobilen Endgerät entspricht;
∘ wobei die zweite Softwarekomponente eine Aktualisierung des kooperativen Dienstes auf dem Empfangsgerät ist;
- Aktualisierung der zweiten Softwareteilkomponente des kooperativen Dienstes auf dem mobilen Endgerät; und
- Übertragung (E14) der zweiten Softwarekomponente auf das Empfangsendgerät (5, 8).

2. Verfahren nach Anspruch 1, außerdem **dadurch gekennzeichnet, dass** es folgende Schritte umfasst:
- Erfassung (E12) mindestens einer Information, die mit der Version der Softwarekomponente auf dem Empfangsendgerät verknüpft ist;
- Analyse (E13) mindestens einer erfassten Information, die mit der Version der Softwarekomponente verknüpft ist;
- je nach den Ergebnissen der Analyse (E13) Entscheidung über die Aktualisierung der Komponente.

3. Verfahren nach Anspruch 1, **dadurch gekennzeichnet, dass** die Kommunikation zwischen den beiden Endgeräten (4,5) über eine Verbindung mit geringem Leistungsverbrauch (BT, ZWave, BTL) hergestellt wird.

4. Vorrichtung zur Steuerung der Aktualisierung eines kooperativen Dienstes (S) in einem lokalen Netzwerk (10), wobei der Dienst (S) mindestens zwei Softwarekomponenten (C1, C2) umfasst, mindestens eine erste Softwarekomponente (C1) auf einem ersten Endgerät, mobiles Endgerät (4) genannt, das an einem anderen Netzwerk als dem lokalen Netzwerk (1), mobiles Netzwerk genannt, angeschlossen ist, und mindestens eine zweite Softwarekomponente (C2) auf einem zweiten Endgerät, Empfangsendgerät (5, 8) genannt, das zur Kommunikation mit dem mobilen Endgerät (4) geeignet ist, **dadurch gekennzeichnet, dass** die Kommunikation zwischen den beiden Endgeräten (4, 5) über das lokale Netzwerk (10) hergestellt wird, und dadurch, dass sie umfasst:
- ein Modul zum Herunterladen (LTE, E10) einer Aktualisierung des Dienstes (S) vom Mobilnetzwerk (1) auf das mobile Endgerät (4), wobei die Aktualisierung umfasst:
o die erste Softwarekomponente, die zwei Teilkomponenten umfasst: eine erste Teilkomponente, die einem Aktualisierungsprogramm entspricht, und eine zweite Teilkomponente, die einer Aktualisierung des kooperativen Dienstes auf dem mobilen Endgerät entspricht;
o wobei die zweite Softwarekomponente eine Aktualisierung des kooperativen Dienstes auf dem Empfangsendgerät ist;
- ein Modul zur Aktualisierung der zweiten Softwareteilkomponente des kooperativen Dienstes auf dem mobilen Endgerät; und
- ein Modul zur Übertragung (COMM, E14) der zweiten Softwarekomponente auf das Empfangsendgerät (5, 8).

5. Mobiles Endgerät (4), das eine Vorrichtung zur Steuerung der Aktualisierung nach Anspruch 4 enthält.

6. System, das ein mobiles Endgerät nach Anspruch 5 und mindestens ein Empfangsendgerät umfasst, das ein elektronischer Schlüssel (5) ist, der enthält: eine Vorrichtung zur Aktualisierung, umfassend ein Modul zum Empfang (COMMD) der zweiten Softwarekomponente (C2, C3) auf dem Empfangsendgerät (5, 8), wobei die zweite Softwarekomponente eine Aktualisierung vom mobilen Endgerät (4) ist, und ein Modul zur Aktualisierung (MAJ) der zweiten Softwarekomponente durch das Empfangsendgerät (5, 8).

7. Computerprogramm, das zur Umsetzung für das Verfahren zur Steuerung der Aktualisierung eines Inhalts geeignet ist, wobei das Programm Anweisungen eines Codes umfasst, der bei Ausführung des Programms durch einen Prozessor die Schritte des Verfahrens zur Steuerung der Aktualisierung nach Anspruch 1 realisiert.

## Claims

1. Method for controlling the update of an interactive service (S) in a local network (10), said service (S) comprising at least two software components (C1, C2), at least one first software component (C1) on a first terminal, called the mobile terminal (4), connected to a network other than the local network (1), called the mobile network, and at least one second software component (C2) on a second terminal, called the receiver terminal (5, 8), able to communicate with the mobile terminal (4), said method being **characterized in that** the communication between the two terminals (4, 5) is set up via said local network (10), said software components interactively ensuring the interactive service, the method being **characterized in that** it comprises steps of:
- downloading (E10) to the mobile terminal (4) an update of the service (S) originating from the mobile network (1), said update comprising:
o the first software component, which comprises two sub-components: a first sub-component corresponding to an update program and a second sub-component corresponding to an update of the interactive service on the mobile terminal;
o the second software component being an update of the interactive service on said receiver terminal;
- updating said second software sub-component of the interactive service on the mobile terminal; and
- transmitting (E14) to said receiver terminal (5, 8) said second software component.

2. Method according to Claim 1, further **characterized in that** it comprises the steps of:
- acquiring (E12) at least one datum related to the version of the software component on the receiver terminal;
- analysing (E13) at least one acquired datum related to the version of the software component;
- depending on the results of the analysis (E13), deciding to update the component.

3. Method according to Claim 1, **characterized in that** the communication between the two terminals (4, 5) is set up over a low-energy link (BT, ZWave, BTL).

4. Device for controlling the update of an interactive service (S) in a local network (10), said service (S) comprising at least two software components (C1, C2), at least one first software component (C1) on a first terminal, called the mobile terminal (4), connected to a network other than the local network (1), called the mobile network, and at least one second software component (C2) on a second terminal, called the receiver terminal (5, 8), able to communicate with the mobile terminal (4), **characterized in that** the communication between the two terminals (4, 5) is set up via said local network (10), and **in that** it comprises:
- a module for downloading (LTE, E10) to the mobile terminal (4) an update of the service (S) originating from the mobile network (1), said update comprising:
o the first software component, which comprises two sub-components: a first sub-component corresponding to an update program and a second sub-component corresponding to an update of the interactive service on the mobile terminal;
o the second software component being an update of the interactive service on said receiver terminal;
- a module for updating said second software sub-component of the interactive service on the mobile terminal; and
- a module for transmitting (COMM, E14) to said receiver terminal (5, 8) said second software component.

5. Mobile terminal (4) including an update-controlling device according to Claim 4.

6. System comprising a mobile terminal according to Claim 5 and at least one receiver terminal that is a dongle (5) that includes: an updating device comprising a module (COMMD) for receiving, on the receiver terminal (5, 8), the second software component (C2, C3), the second software component being an update originating from the mobile terminal (4), and a module (MAJ) for updating the second software component by the receiver terminal (5, 8).

7. Computer program able to be implemented for the method for controlling the update of the content, the program comprising code instructions that, when the program is executed by a processor, carries out the steps of the update-controlling method according to Claim 1.
